# EUROPÄISCHE PATENTSCHRIFT

(11) **EP 1 963 833 B1**
(45) Veröffentlichungstag und Bekanntmachung des Hinweises auf die Patenterteilung: **16.05.2018**
(21) Anmeldenummer: 06819823.3
(22) Anmeldetag: 29.11.2006
(51) Int. Cl.: G01N 27/407, B01J 37/02

(54) **VERFAHREN ZUR HERSTELLUNG EINES SENSORELEMENTS**
METHOD FOR PRODUCING A SENSOR ELEMENT
PROCEDE POUR PRODUIRE UN ELEMENT DE DETECTION

(30) Priorität: 14.12.2005 DE 102005059594
(43) Veröffentlichungstag der Anmeldung: 03.09.2008
(73) Patentinhaber: ROBERT BOSCH GMBH, 70442 Stuttgart (DE)
(72) Erfinder: CRAMER, Berndt, 71229 Leonberg (DE); HEIMANN, Detlef, 70839 Gerlingen (DE); WAHL, Thomas, 75172 Pforzheim (DE); BRAUN, Harry, 71296 Heimsheim (DE); EISELE, Ulrich, 70199 Stuttgart (DE); SCHUMANN, Bernd, 71277 Rutesheim (DE); RENGER, Christoph, 96047 Bamberg (DE); JOCKEL, Joerg, 70839 Gerlingen (DE); BUSE, Frank, 75417 Muehlacker-Enzberg (DE); OPP, Andreas, 70437 Stuttgart (DE); KRUSE, Matthias, 70499 Stuttgart (DE)
(86) Internationale Anmeldenummer: PCT/EP2006/069035
(87) Internationale Veröffentlichungsnummer: WO 2007/068587

(56) Entgegenhaltungen:
- EP-A2- 0 331 513
- EP-A2- 0 369 238
- EP-A2- 0 372 425
- DE-A1- 4 131 503
- US-A- 3 935 089
- US-A- 4 277 322
- US-A- 5 423 973
- US-A- 5 733 504
- "Aldrich Katalog Handbuch Feinchemikalien und Laborgeräte" 2003, SIGMA-ALDRICH CHEMIE GMBH , XP002420877 Seite 1670

## Beschreibung

### Stand der Technik

Es sind keramische Sensorelemente zur Bestimmung der Sauerstoffkonzentration in Abgasen von Verbrennungsmotoren bekannt, die aus einem planaren Festelektrolytkörper gebildet sind und elektrochemische Pump- und/oder Nemstzellen aufweisen können. Diese elektrochemischen Zellen weisen Messelektroden auf, die, soweit sie den korrosiv wirkenden Abgasen ausgesetzt sind, eine oft ungenügende Langzeitbeständigkeit aufweisen. Dies äußert sich beispielsweise in einer Signaldrift der elektrochemischen Messzelle.

Zur Lösung dieses Problems ist aus der DE 41 00 106 C1 ein Sensorelement bekannt, dessen dem Gasgemisch ausgesetzte Messelektrode mit einer Schutzschicht bedeckt ist, die katalytisch aktive Substanzen enthält. Diese Schutzschicht gewährleistet eine katalytische Gleichgewichtseinstellung der zur Messelektrode diffundierenden Abgase und somit eine relativ stabile Regellage des Sensorelementes. Nachteilig an diesem Vorschlag sind die relativ hohen Materialkosten zur Erzeugung der Schutzschicht sowie die Tatsache, dass die Regellage bei Dauerbetrieb nicht völlig stabil ist. Diese Drift ist bedingt durch den Herstellprozess des Sensorelementes, bei dem die Schutzschicht und somit deren Inhaltsstoffe bei hohen Temperaturen mitgesintert werden und infolgedessen nur eine geringe katalytische Aktivität aufweisen.

Weitere Sensorelemente sind in der EP 0369 238 A2, DE 41 31 503 A1, US 5733 504, EP 0372 425 A2, der EP 0 331 513 A2, der US 5,423,973, der US 3,935,089 und der US 4,277, 322 angegeben. Aufgabe der vorliegenden Erfindung ist es, ein Sensorelement bereitzustellen, das eine gute Langzeitbeständigkeit und eine stabile Regellage zeigt und dennoch einfach und kostengünstig hergestellt werden kann.

### Vorteile der Erfindung

Das erfindungsgemäße Verfahren mit den Merkmalen des unabhängigen Ansprüchs löst in vorteilhafter Weise die der Erfindung zugrunde liegende Aufgabe.

Das Sensorelement weist dabei eine Schutzschicht auf, die aufgrund ihrer Ausführung und Materialzusammensetzung eine gute Signalbeständigkeit im Dauerbetrieb zeigt und dennoch verhältnismäßig preisgünstig ausgeführt werden kann. Dies wird erreicht, indem die Schutzschicht porös ausgebildet wird und deren Poren mit ausgewählten katalytisch aktiven Substanzen versehen werden. Die Herstellung des Sensorelementes erfordert lediglich einen zusätzlichen Imprägniervorgang sowie eine zusätzliche Hitzebehandlung und ist daher in einfacher Weise mit herkömmlichen Fertigungsstraßen durchführbar.

Durch die in den Unteransprüchen aufgeführten Maßnahmen sind vorteilhafte Weiterbildungen und Verbesserungen des in den unabhängigen Ansprüchen angegebenen Sensorelements und Verfahrens sowie Mittels zu dessen Herstellung möglich.

So ist von Vorteil, wenn die poröse Schicht des Sensorelementes in ihren Poren zumindest teilweise einen katalytisch aktiven Überzug aufweist, dessen Materialzusammensetzung von der Materialzusammensetzung der porösen Schicht abweicht, und der Palladium oder Ruthenium, ein Alkalimetall oder ein Erdalkalimetall beispielsweise jeweils in Gegenwart von Platin bzw. Palladium und/oder Platin beispielsweise mit einer Mindestkonzentration von 2 Gew.% enthält. Dabei ist insbesondere von Vorteil, wenn die Lösung nicht gleichzeitig Barium und eines der Elemente Rubidium oder Cäsium enthält, da diese bei gemeinsamem Auftreten eine reduzierte katalytische Aktivität zeigen.

Erfindungsgemäß ist vorgesehen, dass die poröse Schicht als Schutzschicht eine Elektrode des Sensorelementes zumindest bereichsweise bedeckt. Auf diese Weise wird eine katalytische Gleichgewichtseinstellung in dem zu bestimmenden Gasgemisch erreicht, bevor dieses Messelektroden des Sensorelementes, die auch in einem inneren Gasraum des Sensorelementes angeordnet sein können, erreicht.

### Zeichnung

Ein Ausführungsbeispiel der Erfindung ist in der Zeichnung dargestellt und in der nachfolgenden Beschreibung näher erläutert. Die einzige Figur zeigt einen Querschnitt durch ein Sensorelement gemäß einem Ausführungsbeispiel der vorliegenden Erfindung.

### Ausführungsbeispiel

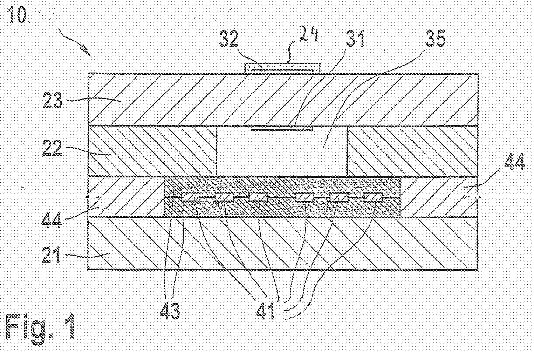

Figur 1 zeigt ein Ausführungsbeispiel des erfindungsgemäßen Sensorelements 10. Das Sensorelement 10 ist schichtförmig aufgebaut und enthält eine erste Festelektrolytschicht 21, eine zweite Festelektrolytschicht 22 und eine dritte Festelektrolytschicht 23. Die Festelektrolytschichten 21 - 23 werden dabei aus einem sauerstoffionenleitenden Festelektrolytmaterial, wie beispielsweise mit Y₂O₃ stabilisiertem oder teilstabilisiertem ZrO₂ ausgeführt. Das Sensorelement 10 ist in einer dem Fachmann bekannten Weise in einem Gasmessfühler verbaut.

Zwischen der ersten und der zweiten Festelektrolytschicht 21, 22 ist eine Heizerleiterbahn 41 mit einer Isolation 43 vorgesehen. Die Isolation 43 ist eine poröse Schicht aus Aluminiumoxid, die die Heizerleiterbahn 41 vollständig umgibt. Die Isolation 43 der Heizerleiterbahn 41 ist seitlich, also in der Schichtebene der Heizerleiterbahn 41, von einem gasdichten Dichtrahmen 44 umgeben. Der Dichtrahmen 44 erstreckt sich bis zur Außenfläche des Sensorelements 10.

In die zweite Festelektrolytschicht 22 ist ein Referenzgasraum 35 eingebracht, der ein Referenzgas enthält. Im Referenzgasraum 35 ist auf der dritten Festelektrolytschicht 23 eine erste Elektrode 31 aufgebracht. Auf der der ersten Elektrode 31 gegenüberliegenden Seite der dritten Festelektrolytschicht 23 und damit auf einer Außenfläche des Sensorelements 10 ist eine zweite Elektrode 32 vorgesehen, die dem Abgas ausgesetzt ist. Die erste und die zweite Elektrode 31, 32 bilden zusammen mit dem zwischen den beiden Elektroden 31, 32 angeordneten Festelektrolyten 23 eine elektrochemische Zelle. Liegen an der ersten Elektrode 31 (im Referenzgasraum 35) und an der zweiten Elektrode 32 (im Abgas) unterschiedliche Sauerstoffpartialdrücke vor, so bildet sich zwischen den beiden Elektroden 31, 32 eine Spannung aus, die ein Maß für den Sauerstoffpartialdruck im Abgas ist (Nernstzelle). Die elektrochemische Zelle 31, 32, 23 ist in einem Messbereich 15 des Sensorelements 10, also an dem dem Abgas zugewandten Endabschnitt des Sensorelements 10, angeordnet.

Um zu gewährleisten, dass an den Elektroden 31, 32 eine Einstellung des thermodynamischen Gleichgewichts der Gasgemischkomponenten erfolgt, bestehen alle verwendeten Elektroden aus einem katalytisch aktiven Material, wie beispielsweise Platin, wobei das Elektrodenmaterial für alle Elektroden in an sich bekannter Weise als Cermet eingesetzt wird, um mit den keramischen Folien zu versintern.

Um insbesondere die äußere Pumpelektrode 32 vor einem direkten Kontakt mit dem potentiell korrosiv und abrasiv wirkenden Gasgemisch zu schützen, ist die äußere Pumpelektrode 32 mit einer Schutzschicht 24 versehen. Diese ist erfindungsgemäß offenporös ausgeführt, wobei die Porengröße so gewählt wird, dass das zu bestimmende Gasgemisch in die Poren der porösen Schicht eindiffundieren kann. Die Porengröße der porösen Schicht liegt dabei in einem Bereich von 2 bis 10 µm. Die poröse Schicht ist aus einem keramischen Material wie beispielsweise Oxiden des Aluminiums, Zirkoniums, Cers oder Titans ausgeführt. Die Porosität der porösen Schicht wird bei der Herstellung des Sensorelementes durch Zusatz von Porenbildnern zu der Siebdruckpaste, die das Grundmaterial der porösen Schicht 24 enthält, entsprechend eingestellt.

Um die Gleichgewichtseinstellung des zu der äußeren Pumpelektrode 32 diffundierenden Gasgemisches zu verbessern, enthält die Schutzschicht zusätzlich katalytisch aktive Substanzen. Diese bewirken insbesondere ein Reaktion oxidierender Gaskomponenten des Gasgemisches mit reduzierenden Koponenten.

Zur Herstellung der Schutzschicht 24 werden die Ausgangsmaterialien wie Keramikpulver, Porenbildner und katalytisch aktive Komponenten in eine Siebdruckpaste überführt. Durch Siebdruck wird dann das Material der Schutzschicht 24 auf den Grünkörper der keramischen Schicht 23 aufgebracht. Es folgt eine Wärmebehandlung insbesondere in Form eines Sinterprozesses. Nach dem Sinterprozess wird die erzeugte poröse Schutzschicht 24 mit einer Imprägnierlösung versehen, die katalytisch aktiven Substanzen oder deren Vorläuferverbindungen enthält.

Danach folgt eine weitere Wärmebehandlung, die zur Trocknung der in die Poren der Schutzschicht 24 eingebrachten Imprägnierlösung und ggf. zur Aktivierung der katalytisch aktiven Substanzen bzw. deren Vorläuferverbindungen führt. Dazu wird das Sensorelement 10 auf eine Temperatur gebracht, bei der das Lösungsmittel der Imprägnierlösung verdampft und sich zumindest teilweise ein Überzug aus katalytisch aktivem Material in den Poren der Schutzschicht 24 ausbildet.

Als katalytisch aktiven Substanzen sind in Anspruch 1 definiert. Die Imprägnierlösung kann zusätzlich insbesondere Lithium, Kalium, Rubidium oder Cäsium enthalten sowie insbesondere Magnesium, Calcium, Strontium oder Barium enthalten.

Eine besonders hohe katalytische Aktivität des resultierenden Überzuges in den Poren der Schutzschicht 24 wird erfindungsgemäß dadurch erreicht, dass Alkali- und Erdalkalimetallverbindungen in Mischung mit Platin eingesetzt werden.

Als besonders günstig hat sich erwiesen, wenn Barium und Rubidium bzw. Barium und Cäsium nicht in der selben Imprägnierlösung eingesetzt werden. In einer weiteren vorteilhaften Ausführungsform wird Barium in Mischung mit einer Aluminiumverbindung eingesetzt, wobei vorzugsweise ein Mischungsverhältnis von 1:4 bis 1:8, insbesondere von 1:6 gewählt wird.

Die Alkali- bzw. Erdalkaliverbindungen werden erfindungsgemäß in einem Konzentrationsbereich von 0,1 bis zu 1,6 mol/l der Imprägnierlösung zugesetzt, während hingegen die Edelmetallverbindungen in einer Konzentration von 0,096 bis 0,4 mol/l in der Imprägnierlösung vorgesehen werden.

In Tabelle 1 sind Versuchsergebnisse aufgelistet, wobei jede der dort aufgeführten Imprägnierlösungen zur Imprägnierung der Schutzschicht einer Standard-Lambdasonde herangezogen wurde und als Maß für die katalytische Aktivität der resultierenden Schutzschicht die Signalkonstanz der Lambdasonden nach einem Dauertest bzw. nach einer größeren Anzahl von Wechseln in der Zusammensetzung des Gasgemisches von einem kraftstoffreichen, fetten Abgas zu einem sauerstoffreichen, mageren Abgas und umgekehrt bestimmt wurde. Als Gegenprobe wurde die Signalkonstanz einer Standard-Lambdasonde ohne Imprägnierung bestimmt (Versuch 77). Als Maß für die Signalkonstanz wurde derjenige Lambdawert eines Gasgemischs erfasst, bei dem die Test-Lambdasonden eine Messspannung von 450 V zeigten, die theoretisch einem Lambdawert von 1 entsprechen würde. Imprägnierlösungen zum Einsatz in erfindungsgemäßen Verfahren sind insbesondere: VersuchsNr. 49, 52.

**Tabelle 1**

| VersuchsNr. | Alkali | Erdalkali | Edelmetall | Ausheizen an | Lambdawert |
|---|---|---|---|---|---|
| 4 | K | Mg² | | Luft | 1.0032 - 1.0057 |
| 7 | K | Ba/Al | Pd³ | Formiergas | 1.0015 - 1.0035 |
| 8 | K | Ba² | Pd³ | Formiergas | 1.0030 - 1.0045 |
| 9 | Li² | Ba² | Pd³ | Formiergas | 1.0020 - 1.0030 |
| 10 | Rb² | Ba² | Pd³ | Luft | 1.0020 - 1.0035 |
| 11 | Rb² | Ba² | Pd³ | Formiergas | 1.0020 - 1.0025 |
| 12 | Rb² | Ca | Pd³ | Luft | 1.0015 - 1.0025 |
| 13 | Rb² | Mg² | Pd³ | Luft | 1.0020 - 1.0035 |
| 14 | Rb² | Sr | Pd³ | Luft | 1.0015 - 1.0035 |
| 15 | Li¹ | Ba/Al | Pd³/Rh³ | Luft | 1.0015 - 1.0025 |
| 16 | Li¹ | Ba² | Pd³/Rh³ | Luft | 1.0015 - 1.0025 |
| 17 | | Mg² | Pd³/Rh³ | Formiergas | 1.0010 - 1.0015 |
| 18 | K | Sr | Pd³/Rh³ | Formiergas | 1.0005 - 1.0035 |
| 19 | Li² | Sr | Pd³/Rh³ | Luft | 1.0005 - 1.0020 |
| 20 | Cs | Ca | Pt³/Pd³ | Formiergas | 1.0010 - 1.0020 |
| 21 | Li² | Ca | Pt³/Pd³ | Formiergas | 1.0005 - 1.0015 |
| 22 | Rb² | Mg² | Pt³/Pd³ | Luft | 1.0020 - 1.0025 |
| 23 | Li¹ | | Pt³/Pd³ | Formiergas | 1,0020 - 1.0030 |
| 24 | | Sr | Pt³/Pd³ | Luft | 1.0005 - 1.0030 |
| 27 | Li¹ | Ba³ | Pt³/Rh³ | Formiergas | 1.0030 - 1.0040 |
| 28 | Li¹ | Ca | Pt³/Rh³ | Luft | 1.0040 - 1.0055 |
| 29 | | Mg² | Pt³/Rh³ | Luft | 1.0010 - 1.0020 |
| 30 | | Mg² | Pt³/Rh³ | Luft | 1.0020 - 1.0025 |
| 31 | K | | Pt³/Rh³ | Formiergas | 1.0015 - 1.0035 |
| 36 | Cs | Mg² | Pt³ | Formiergas | 1.0035 - 1.0045 |
| 37 | Li² | Mg² | Pt³ | Luft | 1.0020 - 1.0030 |
| 38 | K | | Pt³ | Luft | 1.0025 - 1.0035 |
| 39 | Rb² | Sr | Pt³ | Formiergas | 1.0030 - 1.0045 |
| 40 | K | Ba/Al | Pt³ | Luft | 1.0025 - 1.0035 |
| 41 | | Ba/Al | Pt³ | Luft | 1.0015 - 1.0020 |
| 43 | Li¹ | Mg² | Pt³ | Formiergas | 1.0010 - 1.0025 |
| 44 | K | Mg² | Pt³ | Luft | 1.0020 - 1.0035 |
| 45 | Li² | | Pt³ | Luft | 1.0030 - 1.0045 |
| 46 | Rb² | | Pt³ | Formiergas | 1.0020 - 1.0045 |
| 47 | Cs | Sr | Pt³ | Luft | 1.0020 - 1.0040 |
| 48 | | Sr | Pt³ | Luft | 1.0020 - 1.0035 |
| 49 | Li¹ | Ba² | Pt³ | Formiergas | 1.0020 - 1.0035 |
| 50 | | Ba³ | Pt² | Luft | 1.0025 - 1.0035 |
| 51 | | Ca | Pt² | Formiergas | 1.0020 - 1.0030 |
| 52 | Rb² | Mg² | Pt² | Luft | 1.0015 - 1.0025 |
| 53 | Cs | Mg² | Pt² | Formiergas | 1.0010 - 1.0020 |
| 54 | Rb² | | Pt² | Luft | 1.0020 - 1.0025 |
| 55 | Li² | Ba/Al | Pt³/Pd³/Rh³ | Formiergas | 1.0010 - 1.0020 |
| 56 | | Ba² | Pt³/Pd³/Rh³ | Luft | 1.0010 - 1.0030 |
| 57 | K | Ba³ | Pt³/Pd³/Rh³ | Luft | 1.0015 - 1.0025 |
| 58 | Li² | Ba³ | Pt³/Pd³/Rh³ | Formiergas | 1.0010 - 1.0020 |
| 59 | Rb² | Ba³ | Pt³/Pd³/Rh³ | Luft | 1.0025 - 1.0035 |
| 60 | K | Ca | Pt³/Pd³/Rh³ | Luft | 1.0010 - 1.0020 |
| 61 | Rb² | Mg² | Pt³/Pd³/Rh³ | Formiergas | 1.0025 - 1.0035 |
| 62 | Li¹ | Mg² | Pt³/Pd³/Rh³ | Formiergas | 1.0005 - 1.0015 |
| 63 | Li² | Mg² | Pt³/Pd³/Rh³ | Formiergas | 1.0010 - 1.0025 |
| 64 | Rb² | | Pt³/Pd³/Rh³ | Formiergas | 1.0030 - 1.0040 |
| 72 | Li¹ | Mg² | Pt³ | Luft | 1.0030 - 1.0045 |
| 73 | Li¹ | Mg² | Pt³ | Luft | 1.0020 - 1.0035 |
| 74 | Li¹ | Mg² | Ru³ | Formiergas | 1.0035 - 1.0085 |
| 75 | Li¹ | Mg² | Pt³/Ru³ | Formiergas | 1.0015 - 1.0025 |
| 77 | | | | Luft | 1.0050 - 1.0115 |

| | c [mol/l] |
|---|---|
| ¹: | c ≥ 1 |
| ²: | 0.2< c < 1 |
| ³: | c ≤0.1 |

Die Imprägnierung der porösen Schicht 24 mit den in Tabelle 1 genannten Verbindungen führt zu porösen Schichten, die einen Platingehalt von ca. 1.5 bis 8 Gew.%, insbesondere 2 bis 4.5 Gew.%, einen Lithium- oder Rubidiumanteil von ca. 0.1 bis 10 Gew.%, insbesondere 0.2 bis 4.5 Gew.%, einen Anteil an Magnesium von ca. 0.5 bis 9 Gew.%, insbesondere 0.8 bis 4.5 Gew.% und/oder einen Bariumanteil von ca. 0.1 bis 3.5 Gew.%, insbesondere von 0.2 bis 2.2 Gew.% aufweist. Weiterhin kann die poröse Schicht 24 ca. 0.1 bis 10 Gew.%, insbesondere 0.2 bis 3.5 Gew.% eines der Platinmetalle Ruthenium, Rhodium oder Palladium und/oder ca. 0.1 bis 15 Gew.%, insbesondere 0.8 bis 9.8 Gew.% eines der Elemente Kalium, Cäsium, Calcium und Strontium enthalten.

Die poröse Schicht 24 ist nicht nur als Schutzschicht für Elektroden von Sensorelementen geeignet, sondern beispielsweise auch als Diffusionsbarriere innerhalb eines Sensorelementes, um katalytisch eine Gleichgewichtseinstellung eines in das Innere des Sensorelementes eindiffundierenden Gasgemisches zu bewirken.

Sensorelemente, die eine gemäß der Erfindung ausgestaltete poröse Schicht aufweisen, können neben der Bestimmung von Sauerstoff auch der Bestimmung von Gasen wie beispielsweise Stickoxiden, Schwefeloxiden, Ammoniak oder Kohlenwasserstoffen vorzugsweise in Abgasen von Verbrennungsmotoren dienen. Dazu kann der beschriebene Schichtaufbau des Sensorelementes weitere Festelektrolyt-, Isolations- oder Funktionsschichten enthalten.

## Patentansprüche

1. Verfahren zur Herstellung eines Sensorelementes für Gassensoren zur Bestimmung von Gaskomponenten eines Gasgemisches, insbesondere in Abgasen von Verbrennungsmotoren, mit mindestens einer elektrochemischen Messzelle (31, 32, 23) und mindestens einer dem Gasgemisch ausgesetzten porösen Schicht (24), die eine Elektrode (32) des Sensorelementes zumindest bereichsweise bedeckt, wobei Platin mit einer Mindestkonzentration von 1.5 Gew.% in der porösen Schicht (24) enthalten ist, wobei auf einem keramischen Substrat des Sensorelementes zur Erzeugung der porösen Schicht als offenporöse Schicht mit einer Porengröße in einem Bereich von 2 bis 10µm eine pastöse Mischung keramischen Materials mit einem Porenbildner aufgetragen wird, wobei das Substrat einer ersten Hitzebehandlung unterzogen wird, wobei die entstandene poröse Schicht mit einer Imprägnierlösung, die Platin mit einer Mindestkonzentration von 0.2 Mol/l enthält und ein Alkalimetall und ein Erdalkalimetall in Form von Alkali- bzw. Erdalkaliverbindungen in einem Konzentrationsbereich von 0,1 bis 1,6 mol/l enthält und Edelmetallverbindungen bis 0,4 mol/l enthält, imprägniert und getrocknet wird und wobei abschließend eine zweite Hitzebehandlung des Substrats erfolgt, wobei die pastöse Mischung bis zu 2 Gew. % an Platin enthält.

2. Verfahren nach Anspruch 1, **dadurch gekennzeichnet, dass** die Poren der porösen Schicht (24) zumindest teilweise einen katalytisch aktiven Überzug aufweisen, dessen Materialzusammensetzung von der Materialzusammensetzung der porösen Schicht abweicht, und dass der Überzug Palladium, Platin, Ruthenium, ein Alkalimetall und/oder ein Erdalkalimetall enthält.

3. Verfahren nach einem der vorhergehenden Ansprüche, **dadurch gekennzeichnet, dass** die poröse Schicht (24) auf einer dem Gasgemisch ausgesetzten Außenfläche (23) des Sensorelementes vorgesehen ist.

4. Verfahren nach einem der vorhergehenden Ansprüche, **dadurch gekennzeichnet, dass** die zweite Hitzebehandlung in einer Atmosphäre von Formiergas erfolgt.

5. Verfahren nach einem der vorhergehenden Ansprüche, **dadurch gekennzeichnet, dass** die Imprägnierlösung zusätzlich Palladium und/oder Ruthenium in nicht elementarer Form enthält.

6. Verfahren nach einem der vorhergehenden Ansprüche, **dadurch gekennzeichnet, dass** die Lösung nicht gleichzeitig Barium und eines der Elemente Rubidium oder Cäsium enthält.

7. Verfahren nach einem der vorhergehenden Ansprüche, **dadurch gekennzeichnet, dass** die Lösung Barium und Aluminium in einem Verhältnis von 1:2 bis 1:8 enthält.

8. Verfahren nach einem der vorhergehenden Ansprüche, **dadurch gekennzeichnet, dass** die Lösung Palladium oder Ruthenium in einer Konzentration von 0.05 bis 0.4 Mol/l enthält.

9. Verfahren nach einem der vorhergehenden Ansprüche, **dadurch gekennzeichnet, dass** die Lösung zusätzlich Rhodium enthält.

## Claims

1. Process for producing a sensor element for gas sensors for determining gas components of a gas mixture, in particular in exhaust gases from internal combustion engines, having at least one electrochemical measuring cell (31, 32, 23) and at least one porous layer (24) which covers, at least in regions, an electrode (32) of the sensor element and is exposed to the gas mixture, where platinum is present in the porous layer (24) in a minimum concentration of 1.5% by weight, where a paste-like mixture of ceramic material with a pore former is applied as open-pored layer having a pore size in a range from 2 to 10 µm to a ceramic substrate of the sensor element in order to produce the porous layer, where the substrate is subjected to a first heat treatment, where the resulting porous layer is impregnated with an impregnation solution containing platinum in a minimum concentration of 0.2 mol/l and containing an alkali metal and an alkaline earth metal in the form of alkali and alkaline earth metal compounds in a concentration range from 0.1 to 1.6 mol/l and containing noble metal compounds up to 0.4 mol/l and dried and where a second heat treatment of the substrate is finally carried out, where the paste-like mixture contains up to 2% by weight of platinum.

2. Process according to Claim 1, **characterized in that** the pores of the porous layer (24) at least partly have a catalytically active coating whose material composition is different from the material composition of the porous layer and **in that** the coating contains palladium, platinum, ruthenium, an alkali metal and/or an alkaline earth metal.

3. Process according to either of the preceding claims, **characterized in that** the porous layer (24) is provided on an outer surface (23) of the sensor element which is exposed to the gas mixture.

4. Process according to any of the preceding claims, **characterized in that** the second heat treatment is carried out in an atmosphere composed of an H₂/N₂ gas mixture.

5. Process according to any of the preceding claims, **characterized in that** the impregnation solution additionally contains palladium and/or ruthenium in non-elemental form.

6. Process according to any of the preceding claims, **characterized in that** the solution does not simultaneously contain barium and one of the elements rubidium or caesium.

7. Process according to any of the preceding claims, **characterized in that** the solution contains barium and aluminium in a ratio of from 1:2 to 1:8.

8. Process according to any of the preceding claims, **characterized in that** the solution contains palladium or ruthenium in a concentration of from 0.05 to 0.4 mol/l.

9. Process according to any of the preceding claims, **characterized in that** the solution additionally contains rhodium.

## Revendications

1. Procédé de fabrication d'un élément capteur pour des capteurs à gaz pour la détermination de composants gazeux d'un mélange gazeux, notamment dans des gaz d'échappement de moteurs à combustion, comprenant au moins une cellule de mesure électrochimique (31, 32, 23) et au moins une couche poreuse (24) exposée au mélange gazeux, qui recouvre au moins partiellement une électrode (32) de l'élément capteur, du platine étant contenu en une concentration minimale de 1,5 % en poids dans la couche poreuse (24), un mélange pâteux de matériau céramique avec un agent de formation de pores étant appliqué sur un substrat céramique de l'élément capteur pour la formation de la couche poreuse sous la forme d'une couche à pores ouverts ayant une taille de pores dans une plage allant de 2 à 10 pm, le substrat étant soumis à un premier traitement thermique, la couche poreuse formée étant imprégnée avec une solution d'imprégnation, qui contient du platine en une concentration minimale de 0,2 mol/l et contient un métal alcalin et un métal alcalino-terreux sous la forme de composés alcalins ou alcalino-terreux dans une plage de concentration allant de 0,1 à 1,6 mol/l, et contient des composés de métaux nobles jusqu'à 0,4 mol/l, et séchée, et enfin un deuxième traitement thermique du substrat ayant lieu, le mélange pâteux contenant jusqu'à 2 % en poids de platine.

2. Procédé selon la revendication 1, **caractérisé en ce que** les pores de la couche poreuse (24) présentent au moins en partie un revêtement catalytiquement actif, dont la composition de matériau diffère de la composition de matériau de la couche poreuse, et **en ce que** le revêtement contient du palladium, du platine, du ruthénium, un métal alcalin et/ou un métal alcalino-terreux.

3. Procédé selon l'une quelconque des revendications précédentes, **caractérisé en ce que** la couche poreuse (24) est prévue sur une surface extérieure (23) de l'élément capteur exposée au mélange gazeux.

4. Procédé selon l'une quelconque des revendications précédentes, **caractérisé en ce que** le deuxième traitement thermique a lieu dans une atmosphère d'un mélange hydrogène-azote.

5. Procédé selon l'une quelconque des revendications précédentes, **caractérisé en ce que** la solution d'imprégnation contient en outre du palladium et/ou du ruthénium sous forme non élémentaire.

6. Procédé selon l'une quelconque des revendications précédentes, **caractérisé en ce que** la solution ne contient pas simultanément du baryum et un des éléments rubidium ou césium.

7. Procédé selon l'une quelconque des revendications précédentes, **caractérisé en ce que** la solution contient du baryum et de l'aluminium en un rapport de 1:2 à 1:8.

8. Procédé selon l'une quelconque des revendications précédentes, **caractérisé en ce que** la solution contient du palladium ou du ruthénium en une concentration de 0,05 à 0,4 mol/l.

9. Procédé selon l'une quelconque des revendications précédentes, **caractérisé en ce que** la solution contient en outre du rhodium.
